# EUROPEAN PATENT SPECIFICATION

(11) **EP 2 554 083 B1**
(45) Date of publication and mention of the grant of the patent: **21.09.2016**
(21) Application number: 11765624.9
(22) Date of filing: 30.03.2011
(51) Int. Cl.: B65H 45/22, B32B 38/00, B32B 38/08, A47K 10/32, A47K 10/42, A47K 10/16

(54) **METHOD AND APPARATUS FOR MANUFACTURING WET WIPES**
VERFAHREN UND VORRICHTUG ZUR HERSTELLUNG FEUCHTER WISCHTÜCHER
PROCÉDÉ ET APPAREIL DE FABRICATION DE LINGETTES IMPRÉGNÉES

(30) Priority: 31.03.2010 JP 2010084588
(43) Date of publication of application: 06.02.2013
(73) Proprietor: Unicharm Corporation, Ehime 799-0111 (JP)
(72) Inventor: ISHIKAWA, Yoshihide, Kanonji-shi Kagawa 769-1602 (JP); BANDO, Takeshi, Kanonji-shi Kagawa 769-1602 (JP)
(74) Representative: Dolleymores
(86) International application number: PCT/JP2011/057990
(87) International publication number: WO 2011/125724

(56) References cited:
- JP-A- 2001 286 410
- JP-A- 2007 144 053

## Description

### TECHNICAL FIELD

The present invention relates to a method and an apparatus for manufacturing wet wipes.

### BACKGROUND ART

As a method for manufacturing wet wipes formed of a laminated body of sheets impregnated with a predetermined chemical, a method disclosed in Patent Literature 1 has been known.

In the method disclosed in Patent Literature 1, a plurality of laminated original sheets (web) each folded back in a letter Z shape is conveyed as a laminated sheet which is configured so that: a rear face (a lower side, that is, a conveyance- device-contact surface side) comes in contact with a first conveyance roller arranged in the uppermost stream in a conveyance direction; a surface (an upper side, that is, a non-conveyance-device-contact face side) comes in contact with the second and third conveyance rollers arranged within an impregnation tank of the predetermined chemical; and the rear face (the lower side) comes in contact with the fourth conveyance roller arranged in the lowermost stream in the conveyance direction.

Further, the wet wipes manufactured by the method disclosed in Patent Literature 1 have a configuration of a so-called pop-up type, in which at the time of removal of one sheet from a container, the next one sheet is also pulled out together and protruded from a slot of the container.

JP 2007 144053 A discloses a method for manufacturing a wet tissue which is folded in three.

JP 2001 286410 A relates to a method and a folding plate device for forming laminated wet tissues folded into a desired shape.

### CITATION LIST

### PATENT LITERATURE

[Patent Literature 1] Japanese Patent No. 2777871

### SUMMARY OF INVENTION

However, according to the method disclosed in Patent Literature 1, there is no consideration for a contact surface between the laminated sheet and each conveyance roller, and the top face side and the rear face side of the laminated sheet have a different curvature radius at the time of passing through each conveyance roller.

Therefore, the top face side of the laminated sheet is expanded by the first conveyance roller, and after being contracted by the second conveyance roller and the third conveyance roller, it is expanded again by the fourth conveyance roller. On the other hand, the rear face side of the laminated sheet is contracted by the first conveyance roller, and after being expanded by the second conveyance roller and the third conveyance roller, it is contracted again by the fourth roller.

Note that the laminated sheet is formed of the plurality of laminated original sheets, so that in a single original sheet, similar expansion and contraction also occur in the top face side and the rear face when the laminated sheet passes through each conveyance roller.

As a result, when the laminated sheet passes through each conveyance roller, in the original sheet, wrinkles occur in a part folded back in a letter Z shape, thereby causing a problem that conveyance of the laminated sheet becomes unstable.

The present invention has been achieved in consideration of such circumstances, and an object thereof is to provide a method and an apparatus for manufacturing wet wipes, by which a sheet folded back at a non-conveyance-device-contact surface side can be conveyed stably.

A first feature of the present invention is summarized as a method for manufacturing wet wipes formed of a laminated body of sheets impregnated with a predetermined chemical, the method comprising: a step of conveying sheets continuously by a conveyance device; a step of getting a respective one of the sheets through a space between an upper folding plate and a lower folding plate and folding back the respective one of the sheets multiple times to thereby form a raised region which rises while extending along a conveyance direction; a step of impregnating the respective one of the sheets having the raised region, with the predetermined chemical; and a step of laminating the respective sheets impregnated with the predetermined chemical, wherein after the respective one of the sheets passes through the space between the upper folding plate and the lower folding plate, an opposite surface side of a surface on which the raised region is formed, with respect to an extended surface of a surface of the lower folding plate, comes in contact with the conveyance device.

A second feature of the present invention is summarized as a manufacturing apparatus configured to manufacture wet wipes formed of a laminated body of sheets impregnated with a predetermined chemical, the apparatus comprising: a conveyance device configured to convey a plurality of sheets continuously; a folding unit configured to get a respective one of the sheets through a space between an upper folding plate and a lower folding plate and fold back the respective one of the sheets multiple times to form a raised region raised along a conveyance direction; an impregnating unit configured to impregnate the respective one of the sheets having the raised region, with the predetermined chemical; and a laminating unit configured to laminate the respective sheets impregnated with the predetermined chemical, wherein after the respective one of the sheets passes through the space between the upper folding plate and the lower folding plate, an opposite surface side of a surface on which the raised region is formed, with respect to an extended surface of a surface of the lower folding plate, comes in contact with the conveyance device.

As described above, according to the present invention, it is possible to provide a method and an apparatus for manufacturing wet wipes, by which a sheet folded back at a non-conveyance-device-contact surface side can be conveyed stably.

### BRIEF DESCRIPTION OF DRAWINGS

[Fig. 1] Fig. 1 is a perspective view of a package body of wet wipes manufactured by a manufacturing apparatus according to a first embodiment of the present invention.
[Fig. 2] Fig. 2 is a view for showing a state in which the wet wipes manufactured by the manufacturing apparatus according to the first embodiment of the present invention are contained inside the package body.
[Fig. 3] Fig. 3 is a view for showing a state in which the wet wipes manufactured by the manufacturing apparatus according to the first embodiment of the present invention are contained inside the package body.
[Fig. 4] Fig. 4 is a schematic view of the manufacturing apparatus according to the first embodiment of the present invention.
[Fig. 5] Fig. 5 is a view for illustrating a folding unit of the manufacturing apparatus according to the first embodiment of the present invention.
[Fig. 6] Fig. 6 is a view for illustrating an arrangement relationship among the folding unit, an impregnating unit, and a conveyance roller of the manufacturing apparatus according to the first embodiment of the present invention.
[Fig. 7] Fig. 7 is a view for illustrating an arrangement relationship among the folding unit, the impregnating unit, and the conveyance roller of the manufacturing apparatus according to the first embodiment of the present invention.

### DESCRIPTION OF EMBODIMENTS

### (First Embodiment of Present Invention)

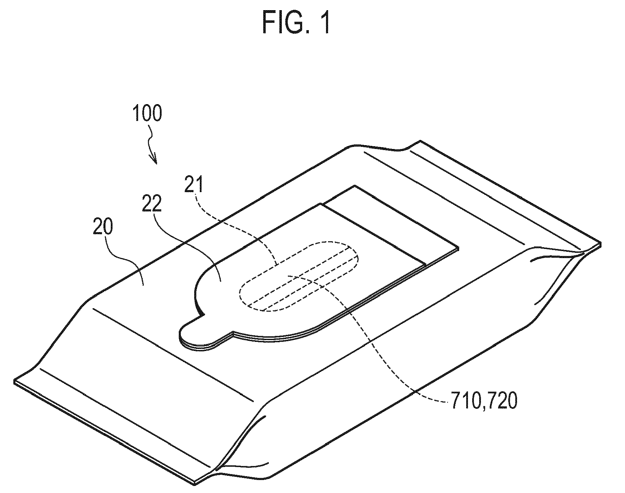

With reference to Figs. 1 to 3, wet wipes manufactured by a manufacturing apparatus 10 according to a first embodiment of the present invention are explained. Such wet wipes are formed of a laminated body of sheets 710, 720 impregnated with a predetermined chemical.

As shown in Fig. 1, a package body 100 of such wet wipes has a package main body 20 having an opening unit 21, a label member 22 attached to the exterior face of the package main body 20 and cover the opening unit 21, and the laminated body of the sheets 710, 720 contained inside the package main body 20.

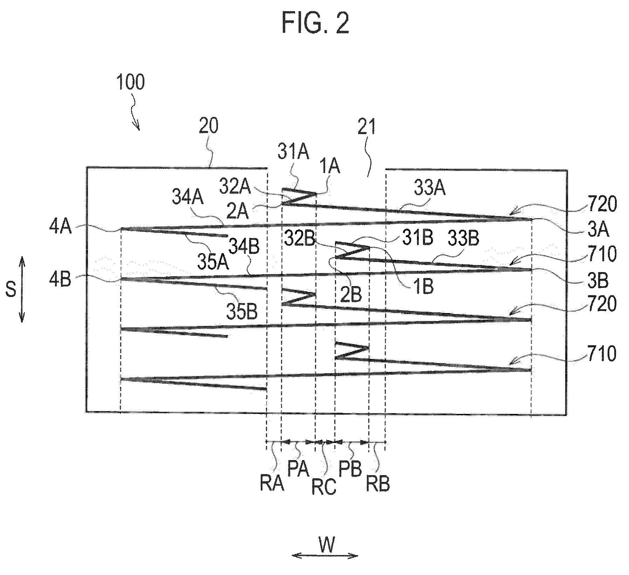

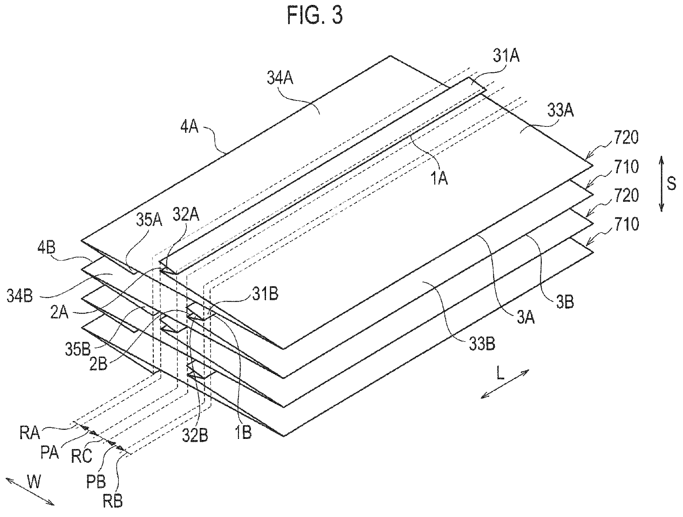

Each of the sheets 710, 720 is contained inside the package main body 20 in a state where these sheets are folded back as shown in Figs. 2 and 3.

As shown in Figs. 2 and 3, the sheet 720 has regions 31A, 32A, 33A, 34A, 35A, whereas the sheet 710 has regions 31B, 32B, 33B, 34B, 35B.

Herein, in the sheet 720, the regions 31A, 32A are folded back along a folding line 1A. The regions 32A, 33A are folded back along a folding line 2A. The regions 33A, 34A are folded back along a folding line 3A. The regions 34A, 35A are folded back along a folding line 4A.

Similarly, in the sheet 710, the regions 31B, 32B are folded back along a folding line 1B. The regions 32B, 33B are folded back along a folding line 2B. The regions 33B, 34B are folded back along a folding line 3B. The regions 34B, 35B are folded back along a folding line 4B.

Note that in the sheet 720, the folding lines 1A, 2A are provided between the folding lines 3A, 4A in the widthwise direction W, whereas in the sheet 710, the folding lines 1B, 2B are provided between the folding lines 3B, 4B in the widthwise direction W.

That is, in the sheet 720, a region between the folding lines 1A, 2A in the widthwise direction W has a four-layered structure formed by folding back the regions 31A, 32A, 33A, 34A, whereas the other region has a two-layered structure formed by folding back the regions 33A, 34A.

Therefore, the regions 31A, 32A rise in a lamination direction S of the laminated body while extending in one direction L of the laminated body.

That is, the regions 31A, 32A are folded back along the folding lines 1A, 2A to thereby configure a raised region PA which is formed in the laminated body so as to rise in the lamination direction S while extending in the one direction L.

Similarly, in the sheet 710, a region between the folding lines 1B, 2B in the widthwise direction W has a four-layered structure formed by folding back the regions 31B, 32B, 33B, 34B, whereas the other region has a two-layered structure formed by folding back the regions 33B, 34B.

Therefore, the regions 31B, 32B rise in a lamination direction S of the laminated body while extending in the one direction L of the laminated body.

That is, the regions 31B, 32B are folded back along the folding lines 1B, 2B to thereby configure a raised region PB which is formed in the laminated body so as to rise in the lamination direction S while extending in the longitudinal direction L.

Further, a region (that is, a raised region PA) between the folding lines 1A, 2A in the widthwise direction W is arranged so as not to be overlapped with a region (that is, a raised region PB) between the folding lines 1B, 2B in the other direction.

Further, in the raised regions PA, PB, the sheets 710, 720 which are adjacent to each other in the lamination direction S are laminated in close contact with each other with a predetermined chemical intervened therebetween.

Herein, in regions RA, RB, RC adjacent to the raised regions PA, PB, a gap is formed between the sheets 710, 720 which are adjacent to each other in the lamination direction S, so that these sheets are not laminated in close contact with each other with the predetermined chemical intervened therebetween.

Note that the wet wipes manufactured with the manufacturing apparatus 10 according to the first embodiment of the present invention are not configured as the aforementioned pop-up type. Therefore, even in a case where the sheet 720 is removed through the opening unit 21 of the package main body 20, the sheet 710 is not pulled up together to be protruded from the opening unit 21.

That is, after removing the sheet 720 through the opening unit 21 of the package main body 20 by holding and pulling up the regions 31A, 32A (that is, the raised region PA of the sheet 720), a user can remove the sheet 710 by holding and pulling up the regions 31B, 32B (that is, the raised region PB of the sheet 70).

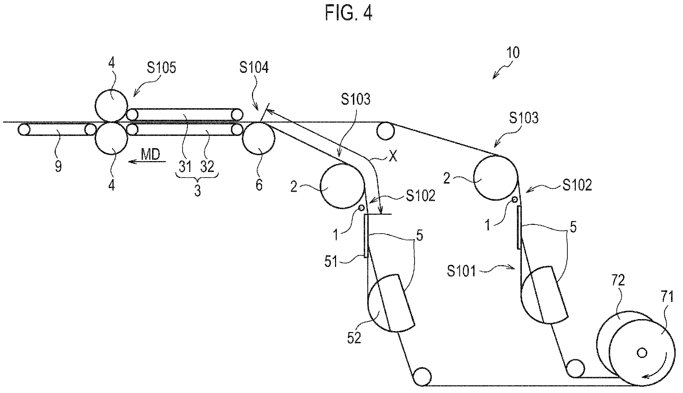

Hereinafter, with reference to Fig. 4, a method for manufacturing wet wipes according to the present embodiment is simply explained.

As shown in Fig. 4, in step S101, the folding unit 5 gets each of sheets 71, 72, which was sent out from a wound state in a roller shape, through a space between upper folding plates 52 to 55 and a lower folding plate 51, thereby folding back each of these sheets in a predetermined shape (specifically, a shape shown in Figs. 2 and 3) at the non-conveyance-device-contact surface side.

That is, in step S101, the folding unit 5 gets each of the sheets 71, 72 through the space between the upper folding plates 52 to 55 and the lower folding plate 51 and folds back each of these sheets multiple times, thereby forming the raised regions PA, PB which rise while extending along a conveyance direction MD.

For example, the sheets 71, 72 have a basis weight of 25 g/m² to 100 g/m², and are formed of fibers made up of a hydrophilic fiber such as rayon, cotton, and pulp, and a simple substance such as PET, PP, PE, and acrylic, or a hydrophobic composite fiber with a slieatli-core structure or a side-by-side structure.

Further, the sheets 71, 72 are a nonwoven fabric which is shaped in a sheet-like form by a spun lace method, an air-laid method, a direct spinning method, or the like, and these sheets are required to include a hydrophilic fiber in terms of permeability of the predetermined chemical at the time of impregnation of the predetermined chemical.

In step S102, an impregnating unit 1 impregnates each of the sheets 71, 72 with a predetermined amount of predetermined chemical from the conveyance-device-contact surface side (a conveyance roller 2 side), that is, the opposite surface side of the surface where the raised regions PA, PB are formed.

In step S103, each of the sheets 71, 72 impregnated with the predetermined chemical is conveyed in contact with a surface of the conveyance roller 2.

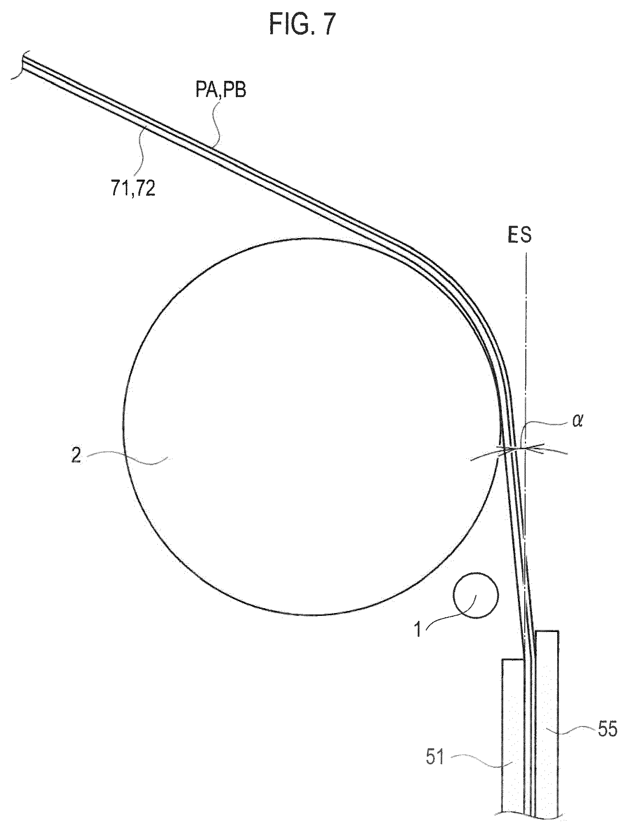

Herein, after the sheets 71, 72 pass through the space between the upper folding plates 52 to 55 and the lower folding plate 51, the opposite surface side of the surface on which the raised regions PA, PB are formed, with respect to an extended surface ES of a surface of the lower folding plate 51, comes in contact with the conveyance roller 2 (conveyance device) (see, Fig. 7).

In step S104, a pile roller 6 laminates each of the sheets 71, 72 impregnated with the predetermined chemical.

Specifically, at the roller 6, the sheet 72 is laminated on the sheet 71 from the non-conveyance-device-contact surface side, in a state where the surface of the sheet 72, impregnated with the predetermined chemical, is faced to the conveyance-device-contact surface side (the pile roller 6 side) and the surface of the sheet 71, impregnated with the predetermined chemical, is faced to the conveyance-device-contact surface side (the pile roller 6 side).

At step S105, a cutting unit 4 cuts the sheets 71, 72 conveyed on a conveyance belt 3 into the sheets 710, 720 with a predetermined size.

Thereafter, after the cut-out sheets 710, 720 are laminated by a predetermined number in a laminating step, these sheets are packaged in the package main body 20 in a packaging step.

Hereinafter, with reference to Figs. 4 to 7, each function of the manufacturing apparatus 10 according to the present embodiment is explained.

As shown in Fig. 4, the manufacturing apparatus 10 has the folding unit 5, the impregnating unit 1, the conveyance roller 2, the pile roller 6, conveyors 3, 9, and the cutting unit 4. Herein, in the manufacturing apparatus 10, the conveyance roller 2 and the conveyors 3, 9 configure the conveyance device which conveys the plurality of sheets 71, 72 continuously.

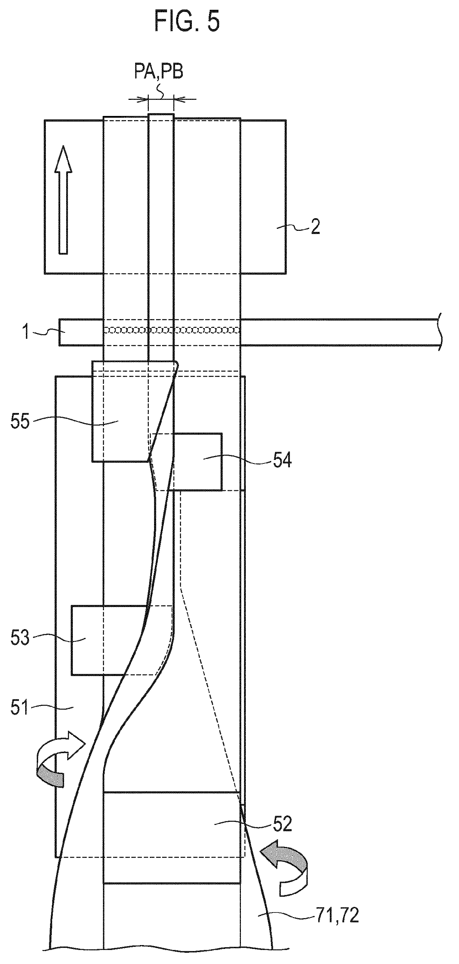

As shown in Fig. 5, the folding unit 5 has the upper folding plates 52 to 55 and the lower folding plate 51. Specifically, the folding unit 5 is configured to fold back each of the sheets 71, 72 at the non-conveyance-device-contact surface side by getting these sheets through the space between the upper folding plates 52 to 55 and the lower folding plate 51.

For example, the folding unit 5 is configured to fold back each of the sheets 71, 72 into a shape shown in Figs. 2 and 3.

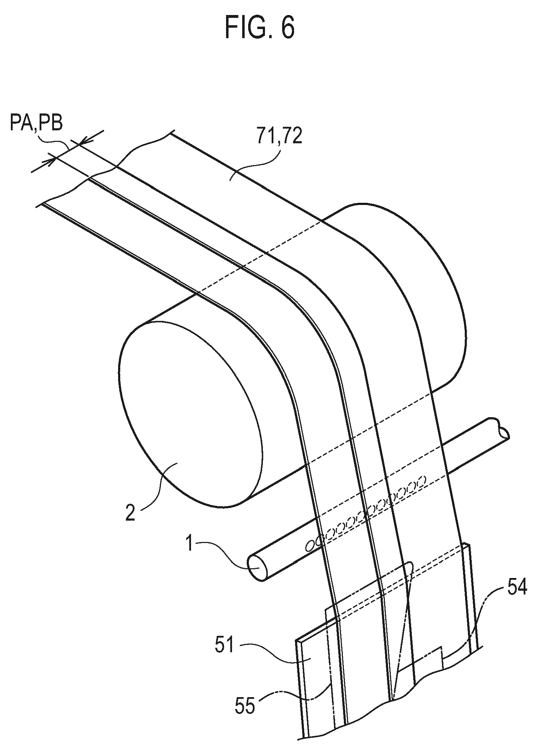

That is, as shown in Figs. 6 and 7, after the sheets 71, 72 pass through the space between the upper folding plates 52 to 55 and the lower folding plate 51, the opposite surface side of the surface on which the raised regions PA, PB are formed, with respect to the extended surface ES of the surface of the lower folding plate 51, comes in contact with the conveyance roller 2 (conveyance device) (see, Fig. 7).

For example, the sheets 71, 72 having passed through the space between the upper folding plates 52 to 55 and the lower folding plate 51 are tilted toward the opposite surface side of the surface on which the raised regions PA, PB are formed, by degree α with respect to the extended surface ES of the surface of the lower folding plate 51, and these sheets 71, 72 are conveyed toward the conveyance roller 2.

The impregnating unit 1 is configured so as to impregnate each of the folded sheets 71, 72 with the predetermined chemical, from the conveyance-device-contact surface side.

For example, the impregnating unit 1 may be configured so as to push out the predetermined chemical by a predetermined amount from a chemical tank by using a proportioning pump. As a result, a predetermined amount of the predetermined chemical is discharged from a pore provided in the impregnating unit 1 and comes in contact with the sheets 71, 72, so that each of the sheets 71, 72 is impregnated with a predetermined amount of the predetermined chemical.

Further, the impregnating unit 1 may be configured so as to impregnate the sheets 71, 72 with the predetermined chemical to be 3.5 (between 3 and 4) times heavier than the sheets 71, 72.

Note that an amount by weight of the predetermined chemical, which is to be impregnated, to the sheets 71, 72 (that is, the degree of impregnation) is appropriately adjustable by the impregnating unit 1.

Herein, the degree of impregnation required for the sheets 71, 72 to adhere to the surface of the conveyance roller 2 and for the sheet 72 to adhere to the top of the sheet 71 is 1.5 times or more, for example, in a case of using as the sheets 71, 72, a spun lace nonwoven fabric of 38 g/m² having a rayon fiber as a main constituent.

Further, as a method of applying a predetermined chemical, the impregnating unit 1 may adopt a method for attaching a predetermined chemical in a droplet form or in a mist form to the sheets 71, 72. However, the above-described method is preferable in consideration of the chemical impregnation degree and pollution by process at the time when the surfaces of the sheets 71, 72, impregnated with the predetermined chemical, are brought in contact with the surface of the conveyance roller 2.

However, it is preferable to use the above-described method in consideration of increase in the value of friction resistance at the time of getting the sheets 71, 72 through the folding unit 5, tear of the sheets 71, 72, decrease in width of the sheets 71, 72, pollution by process due to paper dust adhesion, and so on.

The conveyance roller 2 is connected to a driving source and is a driving roller which rotates by itself and has a smooth surface.

The pile roller 6 configures a laminating unit which laminates each of the sheets 71, 72 impregnated with the predetermined chemical. Further, the pile roller 6 is a roller having a smooth surface and configured to convey each of the sheets 71, 72 at an conveyance speed approximately equal to the conveyance roller 2.

The conveyor 3 is configured to convey each of the sheets 71, 72 at an conveyance speed approximately equal to the conveyance roller 2.

The cutting unit 4 is configured to cut the laminated body of the sheets 71, 72. For example, the cutting unit 4 is configured by a cutter roller having a cutting blade on its surface and an anvil roller having a smooth surface.

Further, likewise the conveyor 3, the conveyor 9 may be configured by an upper conveyor and a lower conveyor. In such a case, the laminated body of the sheets 710, 720 is conveyed while it is sandwiched between the upper conveyor and the lower conveyor.

As a result, it is possible to improve transferability to the conveyor 9 and conveyance stability of the laminated body of the sheets 710, 720 after being cut out by the cutting unit 4.

Further, such upper conveyor may be provided with a concave unit and a convex unit.

Herein, the conveyance speed of the conveyor 9 is 3% higher than the conveyor 3 and the cutting unit 4.

With the manufacturing method and the manufacturing apparatus 10 according to the present embodiment, the sheet 71, 72 can be conveyed stably without the raised regions PA, PB being flipped up or folded at the time when the sheets 71, 72 pass through the conveyance roller 2.

Further, with the manufacturing method and the manufacturing apparatus 10 according to the present embodiment, a means for positioning side portions of the sheets 71, 72 is arranged just before the folding unit 5, so that the sheets 71, 72 can be folded back stably without getting side portions of the sheets 71, 72 out of position from the lower folding plate 51 of the folding unit t5.

The sheets 71, 72 are conveyed while they are slightly expanded in a direction along the upper folding plates 52 to 55, so that in the sheets 71, 72, a length, in the conveyance direction MD, of the surface on which the raised regions PA, PB are formed becomes larger than a length, in the conveyance direction MD, of the opposite surface of the surface on which the raised regions PA, PB are formed.

Therefore, a difference in the curvature radius at the conveyance roller 2 can be absorbed, and the sheets 71, 72 can be conveyed stably, by conveying the sheets 71, 72 while changing the direction at the conveyance roller 2, in a state where the surface having the raised regions, on which PA, PB are formed, is arranged on the non-conveyance-device-contact surface side.

Further, by impregnating the sheets 71, 72 with the predetermined chemical before bringing the folded sheets 71, 72 in contact with the surface of the conveyance roller 2, the predetermined chemical can be intervened between the surface having the raised regions PA, PB formed thereon, and the opposite surface, so that these surfaces can be bonded to each other appropriately, and the sheets 71, 72 can be conveyed stably without the folding of the raised regions PA, PB returning to its original position.

In a case where the sheets 71, 72 include a water-absorbing fiber, such a fiber becomes soft when absorbing water, and therefore, slack easily occurs in the sheets 71, 72.

In view of such a situation, in the manufacturing method and the manufacturing apparatus 10 according to the present embodiment, the predetermined chemical is applied to the folded sheets 71, 72 from the conveyance-device-contact surface side (that is, the opposite surface side of the surface having the raised regions PA, PB formed thereon).

The sheets 71, 72 cause slack due to the predetermined chemical, on the opposite surface of the surface having the raised regions PA, PB formed thereon. Herein, when the surface impregnated with the predetermined chemical (the opposite surface of the surface having the raised regions PA, PB formed thereon) side is brought in contact with the surface of the conveyance roller 2, the surface, which has the raised regions PA, PB formed thereon, and is less affected by slack due to impregnation of the predetermined chemical, presses the sheets 71, 72 in the thickness direction, so that the sheets 71, 72 can be conveyed while stabilizing shapes of the raised regions PA, PB.

Further, in a case where regions 35A, 35B are formed in the opposite surface of the surface on which the raised regions PA, PB are formed, the aforementioned raised regions PA, PB are formed in positions which do not correspond to the regions 35A, 35B. This makes it easy to obtain adhesiveness by the predetermined chemical.

As described above, the present invention has been described in detail by using the above-described embodiment. However, it is apparent to those skilled in the art that the present invention is not limited to the embodiment described in this description. The present invention can be modified and changed without departing from the scope of the present invention defined by the appended claims. Therefore, the description is aimed at illustration and explanation of the present invention, and does not have any meaning which limits the present invention.

### INDUSTRIAL APPLICABILITY

As described above, according to the present invention, it is possible to provide a method and an apparatus for manufacturing wet wipes, by which a sheet folded back at a non-conveyance-device-contact surface side can be conveyed stably.

### REFERENCE NUMERALS

- 10...: Manufacturing apparatus
- 1...: Impregnating unit
- 2...: Conveyance roller
- 3, 9...: Conveyor
- 4...: Cutting unit
- 5...: Folding unit
- 6...: Pile roller
- 71, 72...: Sheet

## Claims

1. A method for manufacturing wet wipes formed of a laminated body of sheets (710, 720) impregnated with a predetermined chemical, the method comprising:
a step of conveying sheets (71, 72) continuously by a conveyance device (2, 3, 9);
a step of getting a respective one of the sheets through a space between an upper folding plate (52 to 55) and a lower folding plate (51) and folding back the respective one of the sheets multiple times to thereby form a raised region (PA, PB) which rises while extending along a conveyance direction;
a step of impregnating the respective one of the sheets having the raised region, with the predetermined chemical; and
a step of laminating the respective sheets impregnated with the predetermined chemical,
wherein after the respective one of the sheets passes through the space between the upper folding plate and the lower folding plate, an opposite surface side of a surface on which the raised region is formed, with respect to an extended surface (ES) of a surface of the lower folding plate, comes in contact with the conveyance device.

2. The method for manufacturing wet wipes according to claim 1, wherein the respective one of the sheets is impregnated with the predetermined chemical from the opposite surface side of the surface on which the raised region is formed.

3. A manufacturing apparatus (10) configured to manufacture wet wipes formed of a laminated body of sheets (710, 720) impregnated with a predetermined chemical, the apparatus comprising:
a conveyance device (2, 3, 9) configured to convey a plurality of sheets (71, 72) continuously;
a folding unit (5) configured to get a respective one of the sheets through a space between an upper folding plate (52 to 55) and a lower folding plate (51) and fold back the respective one of the sheets multiple times to form a raised region (PA, PB) raised along a conveyance direction;
an impregnating unit (1) configured to impregnate the respective one of the sheets having the raised region, with the predetermined chemical; and
a laminating unit (6) configured to laminate the respective sheets impregnated with the predetermined chemical, wherein after the respective one of the sheets passes through the space between the upper folding plate and the lower folding plate, an opposite surface side of a surface on which the raised region is formed, with respect to an extended surface (ES) of a surface of the lower folding plate, comes in contact with the conveyance device.

4. The manufacturing apparatus according to claim 3, wherein the impregnating unit is configured to impregnate the respective one of the folded sheets with the predetermined chemical from the opposite surface side of the surface on which the raised region is formed.

## Patentansprüche

1. Verfahren zur Herstellung feuchter Wischtücher in Form einer laminierten Anordnung von Bögen (710, 720), die mit einer vorgegebenen Chemikalie imprägniert sind, wobei das Verfahren Folgendes umfasst:
einen Schritt, bei dem Bögen (71, 72) kontinuierlich von einem Fördergerät (2, 3, 9) transportiert werden;
einen Schritt, bei dem einer der Bögen durch einen Raum zwischen einem oberen Faltblech (52 bis 55) und einem unteren Faltblech (51) geführt wird und der betreffende Bogen mehrere Male zurückgefaltet wird, so dass ein erhöhter Bereich (PA, PB) entsteht, der ansteigt und sich dabei in einer Förderrichtung erstreckt;
einen Schritt, bei dem der betreffende Bogen mit dem erhöhten Bereich mit der vorgegebenen Chemikalie imprägniert wird; und
einen Schritt, bei dem die betreffenden, mit der vorgegebenen Chemikalie imprägnierten Bögen laminiert werden, wobei, nachdem der betreffende Bogen den Raum zwischen dem oberen Faltblech und dem unteren Faltblech passiert hat, eine der Seite mit dem erhöhten Bereich gegenüberliegende Seite, bezogen auf eine erweiterte Oberfläche (ES) einer Oberfläche des unteren Faltblechs, mit dem Fördergerät in Kontakt kommt.

2. Verfahren zur Herstellung feuchter Wischtücher nach Anspruch 1, wobei der betreffende Bogen von der der Seite mit dem erhöhten Bereich gegenüberliegenden Seite mit der vorgegebenen Chemikalie imprägniert wird.

3. Herstellungsvorrichtung (10), die auf die Herstellung feuchter Wischtücher in Form einer laminierten Anordnung von Bögen (710, 720) ausgelegt ist, die mit einer vorgegebenen Chemikalie imprägniert sind, wobei die Vorrichtung Folgendes umfasst:
ein Fördergerät (2, 3, 9), das darauf ausgelegt ist, mehrere Bögen (71, 72) kontinuierlich zu transportieren;
eine Falteinheit (5), die darauf ausgelegt ist, einen der Bögen durch einen Raum zwischen einem oberen Faltblech (52 bis 55) und einem unteren Faltblech (51) zu führen und den betreffenden Bogen mehrere Male zurückzufalten, so dass ein erhöhter Bereich (PA, PB) entlang einer Förderrichtung gebildet wird;
eine Imprägniereinheit (1), die darauf ausgelegt ist, den betreffenden Bogen mit dem erhöhten Bereich mit der vorgegebenen Chemikalie zu imprägnieren; und
einer Laminiereinheit (6), die darauf ausgelegt ist, die mit der vorgegebenen Chemikalie imprägnierten Bögen zu laminieren, wobei, nachdem der Bogen durch den Raum zwischen dem oberen Faltblech und dem unteren Faltblech geführt wurde, eine der Seite mit dem erhöhten Bereich gegenüberliegende Seite, bezogen auf eine erweiterte Oberfläche (ES) einer Oberfläche des unteren Faltblechs, mit dem Fördergerät in Kontakt kommt.

4. Die Herstellungsvorrichtung nach Anspruch 3, wobei die Imprägniereinheit so ausgelegt ist, dass der gefaltete Bogen von der der Seite mit dem erhöhten Bereich gegenüberliegenden Seite mit der vorgegebenen Chemikalie imprägniert wird.

## Revendications

1. Procédé permettant de fabriquer des lingettes humides formées d'un corps stratifié de feuilles (710, 720) imprégnées d'un produit chimique prédéterminé, le procédé comportant :
une étape consistant à transporter les feuilles (71, 72) de manière continue au moyen d'un dispositif de transport (2, 3, 9) ;
une étape consistant à obtenir une des feuilles respectives à travers un espace entre une plaque de pliage supérieure (52 à 55) et une plaque de pliage inférieure (51) et à replier l'une des feuilles respectives de multiples fois pour former ainsi une zone surélevée (PA, PB) qui monte tout en s'étendant le long d'une direction de transport ;
une étape consistant à imprégner l'une des feuilles respectives présentant la zone surélevée, du produit chimique prédéterminé ; et
une étape consistant à stratifier les feuilles respectives imprégnées du produit chimique prédéterminé,
dans lequel après le passage de ladite une des feuilles respectives à travers l'espace entre la plaque de pliage supérieure et la plaque de pliage inférieure, un coté de surface opposé d'une surface sur laquelle la zone surélevée est formée, par rapport à une surface étendue (ES) d'une surface de la plaque de pliage inférieure, vient en contact avec le dispositif de transport.

2. Procédé permettant de fabriquer des lingettes humides selon la revendication 1, dans lequel ladite une des feuilles respectives est imprégnée du produit chimique prédéterminé depuis le côté de surface opposé de la surface sur laquelle la zone surélevée est formée.

3. Appareil de fabrication (10) configuré pour fabriquer des lingettes humides formées d'un corps stratifié de feuilles (710, 720) imprégnées d'un produit chimique prédéterminé, l'appareil comportant :
un dispositif de transport (2, 3, 9) configuré pour transporter une pluralité de feuilles (71, 72) de manière continue ;
une unité de pliage (5) configurée pour obtenir une des feuilles respectives à travers un espace entre une plaque de pliage supérieure (52 à 55) et une plaque de pliage inférieure (51) et pour replier l'une des feuilles respectives de multiples fois pour former une zone surélevée (PA, PB) surélevée le long d'une direction de transport ;
une unité d'imprégnation (1) configurée pour imprégner ladite une des feuilles respectives présentant la zone surélevée, du produit chimique prédéterminé ; et
une unité de stratification (6) configurée pour stratifier les feuilles respectives imprégnées du produit chimique prédéterminé, dans lequel après le passage de ladite une des feuilles respectives à travers l'espace entre la plaque de pliage supérieure et la plaque de pliage inférieure, un côté de surface opposé d'une surface sur laquelle la zone surélevée est formée, par rapport à une surface étendue (ES) d'une surface de la plaque de pliage inférieure, vient en contact avec le dispositif de transport.

4. Appareil de fabrication selon la revendication 3, dans lequel l'unité d'imprégnation est configurée pour imprégner ladite une des feuilles respectives pliées du produit chimique prédéterminé depuis le côté de surface opposé de la surface sur laquelle la zone surélevée est formée.
